# EUROPÄISCHE PATENTSCHRIFT

(11) **EP 3 558 672 B1**
(45) Veröffentlichungstag und Bekanntmachung des Hinweises auf die Patenterteilung: **04.05.2022**
(21) Anmeldenummer: 17825831.5
(22) Anmeldetag: 19.12.2017
(51) Int. Cl.: B32B 18/00, F16L 59/02, F16L 59/04, F16B 25/00, F16B 33/00, F16L 59/14, F16L 59/147

(54) **MEHRLAGIGER VERBUND FÜR ISOLIERMATERIALIEN**
LAMINATED COMPOSITE FOR INSULATING MATERIAL
MATÉRIAU COMPOSITE À COUCHES POUR MATÉRIEL ISOLANT

(30) Priorität: 20.12.2016 DE 102016225685
(43) Veröffentlichungstag der Anmeldung: 30.10.2019
(73) Patentinhaber: SGL Carbon SE, 65201 Wiesbaden (DE)
(72) Erfinder: HAUSER, Robert, 86405 Meitingen (DE); HAMMERL, Andreas, 86405 Meitingen (DE); SEIBOLD, Jan, 86405 Meitingen (DE)
(86) Internationale Anmeldenummer: PCT/EP2017/083636
(87) Internationale Veröffentlichungsnummer: WO 2018/115006

(56) Entgegenhaltungen:
- EP-A2- 1 591 675
- CN-A- 103 085 358
- CN-B- 102 134 744
- CN-U- 202 768 584
- DE-B1- 2 646 890
- DE-U1- 29 608 334
- JP-A- H0 416 331

## Beschreibung

Die Erfindung betrifft einen neuartigen Verbund und dessen Verwendung als Isoliermaterial.

Wärmeisolationskörper aus Kohlenstoff-Filzen werden beispielsweise in Hochtemperaturanlagen bei der Herstellung von Silizium-Einkristallen verwendet. Solche Hochtemperaturprozesse, welche beispielsweise bei einer Temperatur von über 800 °C unter inerter Atmosphäre ablaufen, stellen hohe thermische und mechanische Anforderungen an die verwendeten Isolierwerkstoffe. Isolierkörper, welche z.B. einen Innenraum eines Hochtemperaturofens auskleiden und damit die Heizkammer von der gekühlten Außenwand von der gekühlten Außenwand trennen, werden häufig aus carbonisierten und gegebenenfalls graphitierten Filzen gefertigt. Gegenüber der Herstellung eines Wärmeisolationskörpers an einem Stück, was beispielsweise durch Wickeln von ungehärteten, harzimprägnierten Filzlagen auf einen Dorn und anschließendes Aushärten des Filzmaterials erfolgen kann, bietet die Herstellung eines Wärmeisolationskörpers aus mehreren Einzelteilen den Vorteil geringeren Rohstoffverschnitts sowie einer effizienteren Hochtemperatur-Nachbehandlung des Filzmaterials.

Aus der EP 1 852 252 B1 ist ein Verfahren zur Herstellung von hochtemperaturbeständigen Isolierkörpern bekannt, bei welchem u.a. mehrere gekrümmte Segmente aus einem auf einem auf eine Dichte zwischen 0,02 und 0,3 g/cm³ verdichteten Graphitexpandat basierten Werkstoff zu einem hohlzylindrischen Bauteil zusammengesetzt werden. Der Zusammenhalt der einzelnen Segmente wird dabei durch einen carbonisierbaren Binder gewährleistet, welcher flächige anisotrope Graphitpartikel enthält. An der Innenfläche des hohlzylindrischen Isolierkörpers wird ferner eine Graphitfolie angeordnet.

In der WO 2011/106580 A2 wird ein aus einem Kohlenstofffasermaterial hergestellter Isolierkörper für einen Reaktor offenbart, der aus mehreren plattenartigen Einzelbauteilen zusammengesetzt ist. Die Einzelbauteile können durch "Nut-und-Feder"-Steck-bindungen unter Verwendung weiterer Verbindungselemente gekoppelt sein.

In der DE4338459A1 werden mehrschichtige Hohlzylinder gezeigt, wobei die Isolationsmaterialien mittels Steckbolzen an einem Außenzylinder befestigt sind.

In der DE102012214407 A1 wird ein Verbund beschrieben umfassend einen CFC-Bolzen mit einer Gegenmutter. CN 102134744 B beschreibt eine Schraube mit Muttern zur Fixierung mehrerer Thermoisoiationsschichten einer Ofenkammer. CN 202768584 U beschreibt eine nicht-metallische feuerfeste Schraube. CN 103085358 A betrifft einen Mehrschichtaufbau zur Thermoisolation, wobei einzelne Schichten u.a. mittels Schrauben abnehmbar angebracht sind. DE 26 46 890 B1 beschriebt einen Vakuumofen mit Graphitheizung, wobei ein Heizelement mit einer Graphitschraube angebracht ist.

Die DE10201222310A1 beschreibt einen Schichtverbundwerkstoff, der wenigstens zwei Lagen Graphitfolie umfasst, wobei diese Lagen mittels eines in die Lagen eingreifenden Verbindungsstifts miteinander verbunden sind.

Nachteilig bei all diesen Verbindungen ist, dass die Verbindungselemente das gesamte Isoliermaterial durchdringen und auf beiden Seiten herausragen. Dies hat zur Folge, dass die Wärme auch nach außen geleitet wird.

Die Aufgabe der vorliegenden Erfindung ist es daher, einen Verbund bereitzustellen, dessen Isoliereigenschaften trotz des Vorhandenseins von Verbindungselementen nicht beeinträchtigt werden und welcher eine erhöhte Stabilität und Formhaltigkeit aufweist.

Diese Aufgabe wird durch einen Verbund gemäß Anspruch 1 und eine Verwendung gemäß Anspruch 15 gelöst.

Die in Anspruch 1 definierte CFC-Schraube stellt dabei das Verbindungselement dar.

Ein weiterer Vorteil des erfindungsgemäßen Verbunds ist, dass ein Austausch von Verschleißteilen in Form der genannten Lagen einfacher wird, wodurch die Einsatzzeit des Gesamtbauteils umfassend den Verbund erhöht werden kann. Die CFC-Schrauben können herausgedreht werden, um es zu ermöglichen, einzelne Lagen des Verbunds auszutauschen. Danach kann der Verbund mittels der CFC-Schraube wieder hergestellt werden.

Im Rahmen der vorliegenden Erfindung wird unter auf Kohlenstoff basierendem Filzmaterial ein carbonisierte Fasern und/oder graphitierte Fasern umfassendes Material verstanden. Vorteilhafterweise wird als Filzmaterial ein Weichfilz oder Hartfilz verwendet, wobei unter Hartfilz ein imprägnierter Weichfilz verstanden wird.

Unter CFC wird carbonfaserverstärkter Kohlenstoff verstanden.

Unter dem Begriff "Einschneiden" wird im Rahmen der vorliegenden Erfindung verstanden, dass das Gewinde der Schraube beim Eindrehen das jeweilige Material der Lagen verdrängt und dessen Platz einnimmt.

Die Anzahl der CFC-Schrauben in dem Verbund ist nicht beschränkt und hängt beispielsweise von der Zusammensetzung des verwendeten Verbunds, von der Größe und/oder der Dicke der Lagen ab.

Gemäß einer bevorzugten Ausführungsform ist die mindestens eine CFC-Schraube aus einem Stück gefertigt. Aus einem Stück gefertigt bedeutet, dass zuerst eine CFC-Platte gepresst und daraus die Schraube gefräst, gedreht oder in sonstigen bekannten Verfahren hergestellt wird.

Nach einer weiteren vorteilhaften Ausführungsform weist die mindestens eine CFC-Schraube einen Kerndurchmesser von 6 mm bis 10 mm, bevorzugt 8 mm, auf. Bei einem Kerndurchmesser von weniger als 6 mm ist die Festigkeit des Verbundes zu gering und das Herstellen einer derartigen Schraube schwierig. Bei einem Kerndurchmesser von mehr als 10 mm wird die Isolierwirkung aufgrund der zu großen Wärmeleitung der Schraube geschwächt.

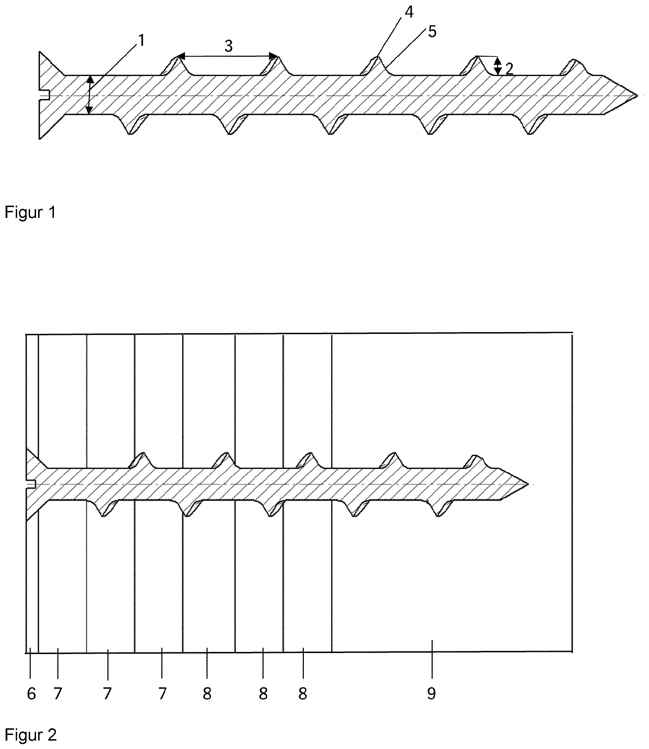

Unter dem Kerndurchmesser der Schraube wird der Durchmesser 1 der Schraube ohne Gewinde (siehe Figur 1) verstanden.

Vorzugsweise beträgt das Verhältnis der Gewindetiefe 2 der mindestens einen CFC-Schraube zu dem Kerndurchmesser der CFC-Schraube 1:2. Die Gewindetiefe 2 beschreibt den Abstand vom Rand des Kerndurchmessers zum Ende der Gewindespitze 4 (siehe Figur 1).

Vorteilhafterweise weist das Gewinde der mindestens einen CFC- Schraube eine Steigung von 15 mm bis 25 mm, bevorzugt 20 mm, auf. Die Gewindesteigung 3 ist der Abstand zwischen den Gewindegängen zweier benachbarter gleichgerichteter Gewindeflanken 5 desselben Gewindeganges (siehe Figur 1). Ein Gewindegang ist eine 360° Drehung des Gewindes. Je größer der Kerndurchmesser der Schraube ist, desto größer muss die Steigung sein. In einer weiteren bevorzugten Ausführungsform beträgt das Verhältnis des Kerndurchmessers der Schraube zur Steigung 2,5:1. Bei einer Steigung von kleiner 15 mm wird das zu verbindende Material zerstört und es wird kein Verbund erhalten. Bei einer Steigung größer 25 mm wird ein zu hoher Kraftaufwand zum Eindrehen der Schraube in das Material benötigt und der Zusammenhalt des Verbundes kann nicht sichergestellt werden. Das Eindrehen erfolgt per Hand, um keine zu hohen Kräfte auszuüben, da ansonsten der Verbund zerstört wird. Es ist trotzdem denkbar mit entsprechenden technischen Mitteln, die ein geregeltes Eindrehen ermöglichen, zu arbeiten. Es ist vorteilhaft, wenn der Kopf der Schraube komplett im Verbundmaterial versinkt (siehe Figur 2). Dadurch wird das Abführen von Wärme, über einen aus dem Verbund herausstehenden Kopf der Schraube, vermieden.

Nach einer weiteren bevorzugten Ausführungsform schneiden mindestens zwei Gewindegänge der CFC-Schraube in das Filzmaterial ein. Somit wird ein sicherer Halt gewährleistet.

Gemäß einer noch weiteren bevorzugten Ausführungsform ist das Gewinde nur teilweise über die Länge der Schraube ausgebildet.

Vorzugsweise weisen die mindestens zwei Lagen des Verbunds mindestens eine Vorbohrung in Größe des Kerndurchmessers der mindestens einen CFC-Schraube auf, um die mindestens eine CFC-Schraube aufzunehmen. Somit wird ein einfaches Einschneiden des Gewindes der Schraube in das Filzmaterial ermöglicht.

Gemäß der vorliegenden Erfindung ist es weiterhin bevorzugt, dass die mindestens eine weitere Lage ein auf Kohlenstoff basierendes Filzmaterial, bevorzugt Weichfilz oder Hartfilz, oder CFC enthält. Die Anzahl der Lagen des Verbundes beträgt mindestens 2. Im Rahmen der vorliegenden Erfindung kann ein Verbund Lagen aus Weich- und Hartfilz, Lagen aus Weichfilz und CFC oder Lagen aus Weich- und Hartfilz und CFC enthalten.

In einer weiteren bevorzugten Ausführungsform beträgt die Anzahl der Lagen 2 bis 10, noch bevorzugter 4 bis 8. Mindestens eine der äußeren Lagen des erfindungsgemäßen Verbundes enthält Hartfilz oder CFC. Hierbei sind die äußeren Lagen diejenigen Lagen, die sich am Rand des Verbundes befinden, d.h. an diesen Lagen befindet sich nur einseitig eine weitere Lage (siehe Figur 2). Dies hat den Vorteil, dass durch die Außenlage aus Hartfilz oder CFC die Steifigkeit des Bauteils gewährleistet wird.

Gemäß einer noch weiteren bevorzugten Ausführungsform weist der Verbund mindestens eine Zwischenlage auf. Die Zwischenlage ist eine sich zwischen den äußeren Lagen befindliche Lage. Diese mindestens eine Zwischenlage kann ein Material umfassen, welches aus der Gruppe bestehend aus Hartfilz, Weichfilz oder Graphitfolie ausgewählt wird.

Nach einer weiteren bevorzugten Ausführungsform weist der Verbund zusätzlich mindestens eine Klebstoffschicht auf. Diese mindestens eine Klebstoffschicht kann zwischen mindestens zwei Lagen und/oder auf der mindestens einen CFC-Schraube aufgebracht sein. Durch die Klebstoffschicht zwischen mindestens zwei Lagen wird eine zusätzliche Verbindung erreicht, die dafür sorgt, dass die Lagen sich nicht zueinander verschieben. Die Klebstoffschicht kann dabei vollflächig, partiell oder auch nur punktuell aufgebracht sein. Durch die mindestens eine Klebstoffschicht auf der mindestens eine CFC-Schraube wird sichergestellt, dass sich diese nicht selbstständig lösen kann.

Vorteilhafterweise umfasst die Klebstoffschicht eine Mischung aus Harz und Graphitpulver.

Der erfindungsgemäße Verbund kann für Isoliermaterialien, bevorzugt für Isoliermaterialien bei der Herstellung von Silizium, verwendet werden.

Nachfolgend wird die vorliegende Erfindung rein beispielhaft anhand vorteilhafter Ausführungsformen und unter Bezugnahme auf die beigefügten Zeichnungen beschrieben. Die Erfindung wird durch die Figuren nicht beschränkt.
Figur 1 zeigt einen Querschnitt der Schraube.
Figur 2 zeigt einen Verbund im Querschnitt.

Nachfolgend wird die vorliegende Erfindung anhand von Ausführungsbeispielen erläutert, wobei die Ausführungsbeispiele keine Einschränkung der Erfindung darstellen.

### Ausführungsbeispiel 1:

Ein Hartfilzzylinder mit einem Außendurchmesser von 1340 mm und einem Innendurchmesser von 1180 mm und einer Höhe von 185 mm bildet die äußere Lage des Verbundes. Es werden 6 CFC-Schrauben mit einer Länge von 120 mm, einem Kerndurchmesser von 8 mm und einer Steigung von 20 mm aus einem CFC-Block gefräst. Die Hartfilz, Weichfilz und CFC-Lagen mit den Maßen 591x125 mm und einer Dicke der Filzlagen von jeweils 11,5 mm und einer Dicke der CFC-Lage von 2,8 mm, wobei die 2,8 mm-CFC-Lage aus 4 laminierten CFC-Lagen besteht, werden in der folgenden Reihenfolge innen aufeinander auf den Hartfilzzylinder gelegt: 3 Lagen Weichfilz, 3 Lagen Hartfilz und CFC-Lage. Auf die Lagen wird eine Bohrschablone aus Karton mit Zeichnungsangaben von 6 zu erstellenden Bohrungen gelegt, mit jeweils einem Abstand von 30 mm zu den Außenkanten. Der Gesamtaufbau kann mit Schraubzwingen verspannt werden. Die Bohrungen werden in Form von Sacklöchern mit einem Durchmesser von 8 mm und einer Tiefe von 100 mm an den Zeichnungsangaben gebohrt. Alle Bohrungen werden anschließend mit einem 90°-Kegelsenker bis zu einem Durchmesser von 18 mm angesenkt. Anschließend werden die Schrauben in den Verbund manuell eingedreht.

### Ausführungsbeispiel 2:

Ein Hartfilzzylinder mit einem Außendurchmesser von 1340 mm und einem Innendurchmesser von 1180 mm und einer Höhe von 185 mm bildet die äußere Lage des Verbundes. Es werden 6 CFC-Schrauben mit einer Länge von 120 mm, einem Kerndurchmesser von 8 mm und einer Steigung von 20 mm aus einem CFC-Block gefräst. Die Hartfilz, Weichfilz und CFC-Lagen mit den Maßen 591x125 mm und einer Dicke der Filzlagen von jeweils 11,5 mm und einer Dicke der CFC-Lage von 2,8 mm, wobei die 2,8 mm-CFC-Lage aus 4 laminierten CFC-Lagen besteht, werden in der folgenden und CFC-Lage innen aufeinander auf den Hartfilzzylinder gelegt: 3 Lagen Weichfilz, 3 Lagen Hartfilz. Auf die Lagen wird eine Bohrschablone aus Karton mit Zeichnungsangaben von 6 zu erstellenden Bohrungen gelegt, mit jeweils einem Abstand von 30mm zu den Außenkanten. Der Gesamtaufbau kann mit Schraubzwingen verspannt werden. Die Bohrungen werden in Form von Sacklöchern mit einem Durchmesser von 8 mm und einer Tiefe von 100 mm an den Zeichnungsangaben gebohrt. Alle Bohrungen werden anschließend mit einem 90°-Kegelsenker bis zu einem Durchmesser von 18 mm angesenkt. Die Gewindeflanken der CFC-Schrauben werden mit einer Klebstoffschicht versehen. Anschließend werden die Schrauben in den Verbund manuell eingedreht. Überschüssiger Klebstoff wird mittels Aceton entfernt.

### Bezugszeichenliste

- 1: Kerndurchmesser der Schraube
- 2: Gewindetiefe der Schraube
- 3: Steigung der Schraube
- 4: Gewindespitze
- 5: Gewindeflanke
- 6: Äußere Lage
- 7: Hartfilz
- 8: Weichfilz
- 9: Hartfilz

## Patentansprüche

1. Verbund enthaltend mindestens zwei Lagen, wobei eine Lage ein auf Kohlenstoff basierendes Filzmaterial umfasst, **dadurch gekennzeichnet, dass** die Verbindung zwischen den mindestens zwei Lagen über mindestens eine CFC-Schraube, die ein Gewinde aufweist, welches sich in das Filzmaterial einschneidet, erfolgt, wobei unter CFC carbonfaserverstärkter Kohlenstoff verstanden wird.

2. Verbund nach Anspruch 1, **dadurch gekennzeichnet, dass** das Filzmaterial ein Weichfilz (8) oder Hartfilz (7, 9) ist.

3. Verbund nach Anspruch 1 oder 2, **dadurch gekennzeichnet, dass** die mindestens eine CFC-Schraube aus einem Stück gefertigt ist.

4. Verbund nach Anspruch 3, **dadurch gekennzeichnet, dass** die mindestens eine CFC-Schraube einen Kerndurchmesser von 6 mm bis 10 mm aufweist.

5. Verbund nach Anspruch 4, **dadurch gekennzeichnet, dass** das Verhältnis der Gewindetiefe (2) der mindestens einen CFC-Schraube zu dem Kerndurchmesser (1) der mindestens einen CFC-Schraube 1 : 2 beträgt.

6. Verbund nach Anspruch 5, **dadurch gekennzeichnet, dass** das Gewinde der mindestens einen CFC- Schraube eine Steigung (3) von 15 mm bis 25 mm aufweist.

7. Verbund nach Anspruch 6, **dadurch gekennzeichnet, dass** mindestens zwei Gewindegänge der mindestens einen CFC-Schraube in das Filzmaterial einschneiden.

8. Verbund nach Anspruch 1 oder 2, **dadurch gekennzeichnet, dass** die mindestens zwei Lagen zur Aufnahme der mindestens einen CFC-Schraube mindestens eine Vorbohrung in Größe des Kerndurchmessers (1) der mindestens einen CFC-Schraube aufweisen.

9. Verbund nach Anspruch 1 oder 2, **dadurch gekennzeichnet, dass** die mindestens eine weitere Lage auf Kohlenstoff basierendes Filzmaterial oder CFC enthält

10. Verbund nach Anspruch 9, **dadurch gekennzeichnet**, das mindestens eine der äußeren Lagen (6) Hartfilz (7, 9) oder CFC enthält.

11. Verbund nach Anspruch 1 oder 2, **dadurch gekennzeichnet, dass** der Verbund mindestens eine Zwischen lage aufweist.

12. Verbund nach Anspruch 11, **dadurch gekennzeichnet, dass** die mindestens eine Zwischenlage ein Material ausgewählt aus der Gruppe bestehend aus Hartfilz (7, 9), Weichfilz (8) oder Graphitfolie umfasst.

13. Verbund nach Anspruch 1 oder 2, **dadurch gekennzeichnet, dass** der Verbund und/oder die mindestens eine CFC-Schraube eine Klebstoffschicht aufweist.

14. Verbund nach Anspruch 13, **dadurch gekennzeichnet, dass** die mindestens eine Klebstoffschicht eine Mischung aus Harz und Graphitpulver umfasst.

15. Verwendung des Verbundes nach einem der vorhergehenden Ansprüche für Isoliermaterialien.

## Claims

1. Composite containing at least two layers, one layer comprising a carbon-based felt material, **characterised in that** the at least two layers are connected via at least one CFC screw which has a thread that cuts into the felt material, CFC being understood to mean carbon fiber reinforced carbon.

2. Composite according to claim 1, **characterised in that** the felt material is a soft felt (8) or rigid felt (7, 9).

3. Composite according to either claim 1 or claim 2, **characterised in that** the at least one CFC screw is made from one piece.

4. Composite according to claim 3, **characterised in that** the at least one CFC screw has a core diameter of 6 mm to 10 mm.

5. Composite according to claim 4, **characterised in that** the ratio of the thread depth (2) of the at least one CFC screw to the core diameter (1) of the at least one CFC screw is 1:2.

6. Composite according to claim 5, **characterised in that** the thread of the at least one CFC screw has a pitch (3) of 15 mm to 25 mm.

7. Composite according to claim 6, **characterised in that** at least two thread turns of the at least one CFC screw cut into the felt material.

8. Composite according to either claim 1 or claim 2, **characterised in that** the at least two layers for receiving the at least one CFC screw have at least one pilot hole the size of the core diameter (1) of the at least one CFC screw.

9. Composite according to either claim 1 or claim 2, **characterised in that** the at least one further layer contains carbon-based felt material or CFC.

10. Composite according to claim 9, **characterised in that** at least one of the outer layers (6) contains rigid felt (7, 9) or CFC.

11. Composite according to either claim 1 or claim 2, **characterised in that** the composite has at least one intermediate layer.

12. Composite according to claim 11, **characterised in that** the at least one intermediate layer comprises a material selected from the group consisting of rigid felt (7, 9), soft felt (8) or graphite foil.

13. Composite according to either claim 1 or claim 2, **characterised in that** the composite and/or the at least one CFC screw has an adhesive layer.

14. Composite according to claim 13, **characterised in that** the at least one adhesive layer comprises a mixture of resin and graphite powder.

15. Use of the composite according to any of the preceding claims for insulation materials.

## Revendications

1. Matériau composite contenant au moins deux couches, une couche comprenant un matériau feutre à base de carbone, **caractérisé en ce que** la liaison entre les au moins deux couches est assurée par au moins une vis CFC présentant un filet qui entaille le matériau feutre, CFC désignant du carbone renforcé de fibres de carbone.

2. Matériau composite selon la revendication 1, **caractérisé en ce que** le matériau feutre est un feutre mou (8) ou un feutre dur (7, 9).

3. Matériau composite selon la revendication 1 ou 2, **caractérisé en ce que** l'au moins une vis CFC est réalisée d'un seul tenant.

4. Matériau composite selon la revendication 3, **caractérisé en ce que** l'au moins une vis CFC a un diamètre de noyau de 6 à 10 mm.

5. Matériau composite selon la revendication 4, **caractérisé en ce que** le rapport entre la profondeur de filet (2) de l'au moins une vis CFC et le diamètre de noyau (1) de l'au moins une vis CFC est de 1: 2.

6. Matériau composite selon la revendication 5, **caractérisé en ce que** le filet de l'au moins une vis CFC comporte un pas (3) de 15 à 25 mm.

7. Matériau composite selon la revendication 6, **caractérisé en ce qu'**au moins deux filets de l'au moins une vis CFC entaillent le matériau feutre.

8. Matériau composite selon la revendication 1 ou 2, **caractérisé en ce que** les au moins deux couches de réception de l'au moins une vis CFC présentent au moins un pré-forage de la dimension du diamètre de noyau (1) de l'au moins une vis CFC.

9. Matériau composite selon la revendication 1 ou 2, **caractérisé en ce que** l'au moins une autre couche contient un matériau feutre à base de carbone ou du CFC.

10. Matériau composite selon la revendication 9, **caractérisé en ce qu'**au moins l'une des couches extérieures (6) contient du feutre dur (7, 9) ou du CFC.

11. Matériau composite selon la revendication 1 ou 2, **caractérisé en ce que** le matériau composite comporte au moins une couche intermédiaire.

12. Matériau composite selon la revendication 11, **caractérisé en ce que** l'au moins une couche intermédiaire comprend un matériau choisi dans le groupe constitué du feutre dur (7, 9), du feutre mou (8) ou de la feuille de graphite.

13. Matériau composite selon la revendication 1 ou 2, **caractérisé en ce que** le matériau composite et/ou l'au moins une vis CFC comporte une couche adhésive.

14. Matériau composite selon la revendication 13, **caractérisé en ce que** l'au moins une couche adhésive comprend un mélange de résine et de poudre de graphite.

15. Utilisation du matériau composite selon l'une des revendications précédentes pour des matériaux isolants.
